## Europäisches Patentamt

## European Patent Office

## Office européen des brevets

(19)

(11) Veröffentlichungsnummer: **0 037 523**
**B1**

(12) # EUROPÄISCHE PATENTSCHRIFT

(45) Veröffentlichungstag der Patentschrift:
**13.04.83**

(21) Anmeldenummer: **81102276.3**

(22) Anmeldetag: **26.03.81**

(51) Int. Cl.³: **B 29 B 1/06**, B 29 D 27/02,
B 01 F 3/12

(54) **Vorrichtung zum Herstellen eines aus mindestens zwei fliessfähigen Reaktionskomponenten und Füllstoffen bestehenden, Massiv- oder Schaumstoff bildenden Gemisches.**

(30) Priorität: **03.04.80 DE 3013237**

(43) Veröffentlichungstag der Anmeldung:
**14.10.81 Patentblatt 81/41**

(45) Bekanntmachung des Hinweises auf die Patenterteilung:
**13.04.83 Patentblatt 83/15**

(84) Benannte Vertragsstaaten:
**DE FR GB IT**

(56) Entgegenhaltungen:
**CH-B-517 581**
**DE-A-1 729 539**
**DE-U-7 504 212**

(73) Patentinhaber: **BAYER AG, Zentralbereich Patente, Marken und Lizenzen, D-5090 Leverkusen 1, Bayerwerk (DE)**

(72) Erfinder: **Skoupi, Dieter, Frangenberg 39, D-5251 Linde/Lindlar (DE)**
Erfinder: **Weber, Gerd, Am Bücher Hof 7, D-5653 Leichlingen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Vorrichtung zum Herstellen eines aus mindestens zwei fließfähigen Reaktionskomponenten und Füllstoffen bestehenden, Massiv- oder Schaumstoff bildenden Gemisches

Die Erfindung richtet sich auf eine Vorrichtung zum Herstellen eines aus mindestens zwei fließfähigen Reaktionskomponenten und Füllstoffen bestehenden, Massiv- oder Schaumstoff bildenden Gemisches, bestehend

a) aus Vorratsbehältern für Reaktionskomponenten;
b) aus Zuleitungen, die von den Vorratsbehältern
c) über Dosierpumpen zu
d) einem Mischkopf führen und
e) über Einspritzöffnungen in eine Mischkammer münden;
f) aus einer an die Mischkammer anschließende Auslaßbohrung;
g) aus mindestens einem Vorratsbehälter für Füllstoff, von dem
h) mindestens eine Füllstoffzuführung abführt, deren Mündung die in einem Gehäuse angeordnete Auslaßbohrung konzentrisch umgibt.

Derartige Vorrichtungen, wie z. B. bekannt aus der schweizerischen Patentschrift CH-B-517 581, werden beispielsweise bei der Herstellung von endlosen Profilen, wie Bahnen oder Schaumstoffblöcke, verwendet, wobei das Reaktionsgemisch über längere Zeiträume beim kontinuierlichen Durchlauf der Reaktionskomponenten durch eine Mischkammer hergestellt wird. Falls es sich um die Füllung von Formwerkzeugen handelt, erfolgt die Vermischung ebenfalls im kontinuierlichen Durchlauf durch eine Mischkammer, wobei jedoch der Mischvorgang nach jeder Formfüllung unterbrochen wird.

Die Zugabe von Füllstoffen dient verschiedenen Zwecken. Minderwertige Füllstoffe werden zugegeben, um für wenig beanspruchte Artikel die Materialkosten zu senken. Die Zugabe hochwertiger Füllstoffe geschieht immer dann, wenn man bestimmte Eigenschaften erreichen oder verbessern will, um den Artikel den Anforderungen entsprechend auszulegen. Es eignen sich unter anderem solche auf Basis von Silikaten, Sulfaten, Carbonaten, Farbpigmenten und Fasern, insbesondere Glas.

Die Füllstoffe liegen meist in feinpulvriger bis körniger, manchmal auch in kurzfaseriger Form vor. Gegebenenfalls sind sie angeschlämmt. In der Regel sind die Füllstoffe abrasiv und verursachen starken Verschleiß in den Zuleitungen, an den Pumpen und den Einspritzdüsen.

Die direkte Einführung der Füllstoffe in die Mischkammer und die gleichzeitige Vermischung mit den Reaktionskomponenten hat sich wegen dieser abrasiven Eigenschaften als technisch und wirtschaftlich nicht vertretbar erwiesen. Bei den heute meistens verwendeten Mischköpfen mit Reinigungsstößel wären die Passungen schnellstens verschlissen.

Deshalb wird gemäß CH-B-517 581 vorgeschlagen, Füllstoff über eine im Strömungsweg eines Schaumstoff bildenden Reaktionsgemisches mündende Dosierleitung in den der Schäumvorrichtung kontinuierlich zufließenden Strom des Reaktionsgemisches einzuführen, also hinter der eigentlichen Mischkammer. Die Zudosierung des Füllstoffes in die sogenannte Dosierleitung erfolgt über eine Schwingrinne. Zu Beginn und zum Ende der Füllstoffzumischung verfälscht das Volumen der Dosierleitung das Dosierverhältnis, so daß ein inhomogenes Endprodukt entsteht, was sich insbesondere bei der Herstellung von hochwertigen Formteilen in Formwerkzeugen sehr nachteilig bemerkbar macht.

Aus der DE-U-7 504 212 ist ein Mischgerät zum Zuspeisen eines Pulvervorrates zu einem Flüssigkeitsstrom, insbesondere von Guargummi zu einer Bohrflüssigkeit, bekannt. Allein schon, weil die Zugabe des Pulvers mittels Druckgas erfolgt, eignet sich dieses Mischgerät nicht für die Eindosierung von insbesondere abrasiven Füllstoffen in ein Reaktionsgemisch. Derartige Reaktionsgemische unterliegen einem strengen Gashaushalt, um ein gutes Endprodukt sicherzustellen. Aber auch von der ganzen Konzeption her ist dieses vorbekannte Mischgerät nicht für die Herstellung eines Gemisches aus Reaktionskomponenten und Füllstoff bzw. aus einem Reaktionsgemisch und Füllstoff angelegt.

Es besteht die Aufgabe, eine Vorrichtung zu finden, mit welcher Füllstoff über den gesamten Arbeitszeitraum, also auch zu Beginn und Ende, dem Reaktionsgemisch dosiert beigegeben werden kann, wobei insbesondere auch ein Vorlaufen oder Nachlaufen des Füllstoffes ausgeschlossen wird.

Das Neue ist darin zu sehen, daß die Auslaßbohrung teilweise in einer koaxialen, im Gehäuse verschiebbaren Hülse angeordnet ist, die als Verschlußorgan für die Füllstoffzuführung gestaltet ist.

Auf diese Weise ist die Dosierung unmittelbar an die Vereinigungsstelle von Reaktionsgemisch und Füllstoff verlegt. Eine Verfälschung des Dosierverhältnisses ist nicht mehr möglich, da das Öffnen und Schließen der Füllstoffzuführung mit dem Beginn und dem Ende der Reaktionsgemischerzeugung abgestimmt werden kann. Die Vorrichtung läßt sich zeitweise auch ohne Füllstoffzugabe betreiben, und es eröffnet sich die Möglichkeit, den Füllstoff dem erzeugten Reaktionsgemisch nur zeitweise zuzugeben, so daß Fertigartikel entstehen, die Zonen mit und Zonen ohne Füllstoffgehalt aufweisen.

Weder Pumpen, Zuleitungen noch Düsen oder gegebenenfalls Steuerkanäle sind den abrasiv wirkenden Füllstoffen ausgesetzt. Lediglich die Auslaßbohrung kommt mit den Füllstoffen in Kontakt. Sie ist aber in einem gehäuseartigen Teil angeordnet, das als Ganzes leicht austauschbar ist und/oder an den gefährdeten Stellen zusätzlich austauschbare Teile aus verschleißfestem Material aufweist.

Vorzugsweise ist die Hubweite der Hülse einstellbar.

Durch diese Maßnahme wird erreicht, daß der Durchströmquerschnitt der Mündung der Füllstoffzuführung einen gewünschten Wert aufweist. Auf diese Weise läßt sich die zuzuführende Füllstoffmenge unabhängig von der Saugkraft des Strahls des Reaktionsgemisches einstellen bzw. verändern, und zwar auch während des Mischvorganges.

Nach einer weiteren Variante sind mehrere Füllstoffzuführungen hintereinander angeordnet.

Dies hat den Vorteil, daß man verschiedene Füllstoffe getrennt nacheinander zuleiten kann, oder man kann gleichartigen Füllstoff über mehrere Füllstoffzuführungen einbringen, um eine höhere Beladung des Reaktionsgemisches mit Füllstoff zu erreichen.

Nach einer besonders vorteilhaften Ausführungsform mündet die Füllstoffzuführung unter einem mindestens dem Schüttwinkel des einzubringenden Füllstoffes entsprechenden Winkel in die Auslaßbohrung.

Diese Maßnahme verringert die Brückenbildungsgefahr und begünstigt das Nachgleiten des Füllstoffes in der Zuführung.

Vorzugsweise ist in der Auslaßbohrung ein Reinigungsstößel verschiebbar gelagert.

Reinigungsstößel dieser Art sind an sich bekannt (US-PS 3 975 128) und bieten den Vorteil, daß die Mischkammer nicht gespült zu werden braucht.

Nach einer besonderen Ausführungsform ist die Auslaßbohrung in einem unter einem Winkel, vorzugsweise quer zum Auslaß der Mischkammer, vorgesehenen Vorsatzstück angeordnet.

Diese Maßnahme erlaubt die Umrüstung bereits vorhandener Mischköpfe, indem das Vorsatzstück gegen die Auslaßöffnung der Mischkammer angesetzt wird.

Bei einer gegenüber dem Vorsatzstück alternativen Ausführungsform ist der Auslaßbohrung die Mischkammer, in der gleichen Achse liegend, vorgeordnet.

Vom Prinzip her ist diese Anordnung von Auslaßbohrung und Mischkammer ohne die neuartige Füllstoffzugabe ebenfalls bekannt (US-PS 2 890 836, US-PS 4 141 470).

Die neue Vorrichtung ist in der Zeichnung in mehreren Ausführungsbeispielen rein schematisch dargestellt und nachstehend näher erläutert. Es zeigt

Fig. 1 eine erste Ausführungsform der Vorrichtung mit Vorsatzstück,

Fig. 2 eine zweite, kompaktere Ausführungsform und

Fig. 3 eine Ausführungsform mit mehreren nacheinandergeschalteten Füllstoffzuführungen.

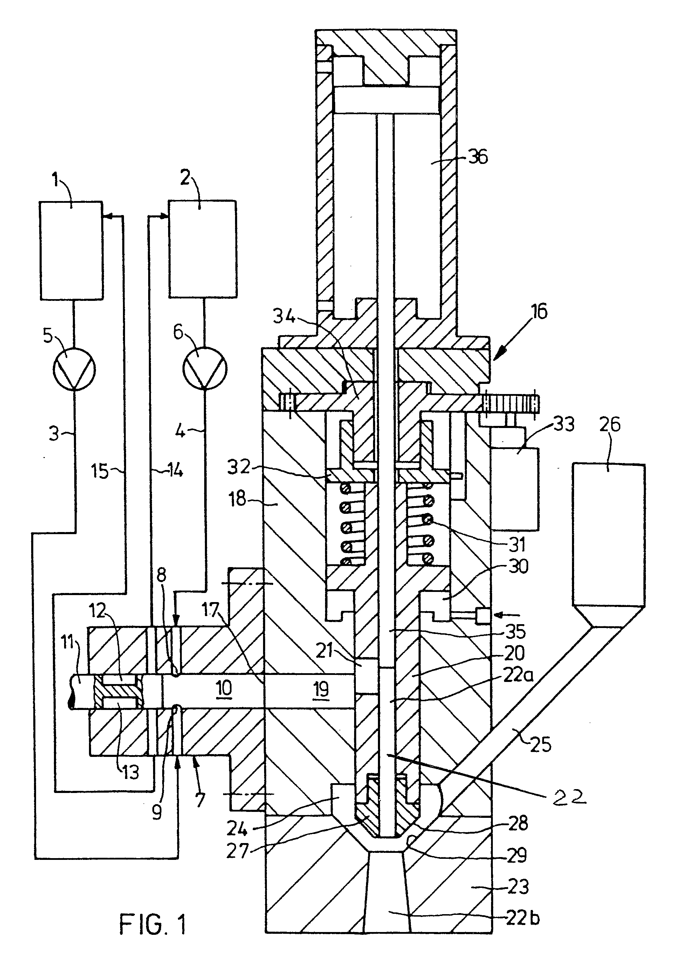

In der Vorrichtung gemäß Fig. 1 gelangen die Reaktionskomponenten Polyol und Isocyanat, die bei ihrer Reaktion Polyurethanschaumstoff bilden, von Vorratsbehältern 1, 2 über Zuleitungen 3, 4, in denen Dosierpumpen 5, 6 angeordnet sind, zu einem Mischkopf 7 und münden über Einspritzöffnungen 8, 9 in eine Mischkammer 10. In ihr ist ein Ausstoß- und Steuerkolben 11 verschiebbar gelagert. Er weist Rücklaufnuten 12, 13 auf, über die die Zuleitungen 3, 4 über Kreislaufleitungen 14, 15 mit den Vorratsbehältern 1, 2 verbindbar sind. An dem Mischkopf 7 ist ein Vorsatzstück 16 derart angeordnet, daß sich die Mischkammer 10 über ihre eigentliche Auslaßöffnung 17 hinaus in das Gehäuse 18 des Vorsatzstückes 16 hinein in Form eines Verbindungskanals 19 verlängert. Im Gehäuse 18 ist quer zur Achse der Mischkammer 10 eine verschiebbare Hülse 20 geführt, die einem den Querschnitt der Mischkammer 10 bzw. demjenigen des Verbindungskanals 19 entsprechenden Durchbruch 21 aufweist. Eine Auslaßbohrung 22 ist teils (22a) in der im Gehäuse 18 geführten Hülse 20, teils (22b) in einem das Gehäuse 18 abschließenden koaxialen Auslaufstück 23 angeordnet. Am Übergang des Gehäuses 18 zum Auslaufstück 23 ist die Hülse 20 von einem konzentrischen Ringkanal 24 umgeben, in den eine unter dem Schüttwinkel eines zuzuführenden Füllstoffes geneigte Füllstoffzuführung 25 einmündet. Sie führt von einem Vorratsbehälter 26 ab. Die Hülse 20 weist einen austauschbaren Kopf 27 aus hochfestem Stahl auf. Der Kopf 27 trägt eine schräge Stirnfläche 28, die mit einer entsprechend geneigten Dichtfläche 29, die den Boden des Ringkanals 24 bildet und im Auslaufstück 23 angeordnet ist, zusammenwirkt. Der Durchbruch 21 ist derart angeordnet, daß er mit dem Verbindungskanal 19 fluchtet, wenn die Hülse 20 die Füllstoffzuführung 25 verschließt; d. h., wenn der Kopf 27 auf der Dichtfläche 29 aufsitzt. In dieser Stellung kann der Steuer- und Ausstoßkolben 11 bis in die Auslaßbohrung 22a geschoben werden. Die Verschiebbarkeit der Hülse 20 ist durch einen Hydraulikmotor 30 gewährleistet. Er arbeitet gegen eine Druckfeder 31. Sie stützt sich an einer im Gehäuse 18 geführten Stellmutter 32 ab, die mit einer weiteren, von außen mittels eines Justierantriebs 33 betätigbaren Stellmutter 34 zusammenwirkt. Damit läßt sich die Stellmutter 32 in axialer Richtung zum Zwecke der Einstellung der gewünschten Hubhöhe der Hülse 20 verstellen. Die Stellmutter 32 dient als Anschlag für die Hülse 20. Schließlich ist in der Auslaßbohrung 22 noch ein Reinigungsstößel 35 geführt, der durch einen Hydraulikmotor 36 betätigbar ist.

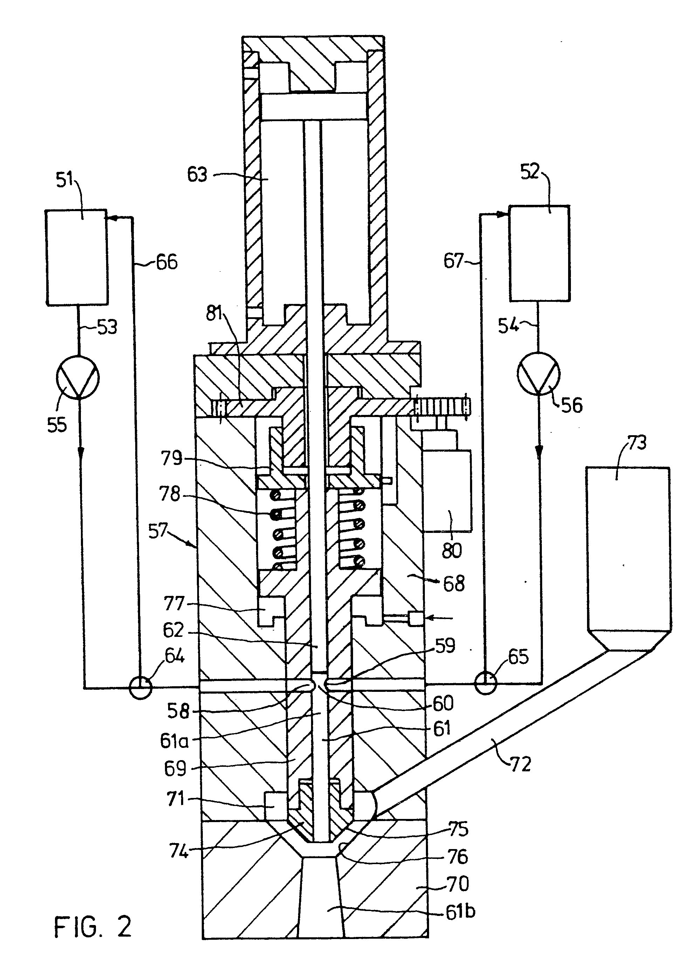

Bei der Vorrichtung gemäß Fig. 2 gelangen die Reaktionskomponenten Polyol und Isocyanat, die zu einem Polyurethanschaumstoff reagieren, von den Vorratsbehältern 51, 52 über Zuleitungen 53, 54, in denen Dosierpumpen 55, 56 angeordnet sind, zu einem Mischkopf 57. Sie münden über Einspritzöffnungen 58, 59 in eine Mischkammer 60. Diese stellt eine Verlängerung einer Auslaufbohrung 61 dar. Mischkammer 60 und Auslaufbohrung 61 gehen ohne Abgrenzung ineinander über. Die Mischkammer 60 ist rückseitig durch einen Reinigungsstößel 62 begrenzt, der durch die Mischkammer 60 bis an das Ende der Auslaßöffnung 61 mittels eines hydraulischen Antriebs 63 verschiebbar ist. Von in den Zuleitungen 53, 54 angeordneten Umschaltventilen 64, 65 zweigen in die Vorratsbehälter 51, 52 mündende Kreislaufleitungen 66, 67 ab. Die Auslaufbohrung 61 ist teils (61a) in einer im Gehäuse 68 des Mischkopfes 57 geführten Hülse 69, teils (61b) in einem das Gehäuse 68 abschließenden koaxialen Auslaufstück 70 angeordnet. Am Übergang des Gehäuses 68 zum Auslaufstück 70 ist die Hülse 69 von einem konzentrischen Ringkanal 71 umgeben, in den eine unter dem Schüttwinkel eines zuzuführenden Füllstoffes, z. B. Bariumsulfat, geneigte Füllstoffzuführung 72 einmündet, die von einem Vorratsbehälter 73 abführt. Die Hülse 69 weist einen austauschbaren Kopf 74 aus hochverschleißfestem Polyurethanelastomer auf. Der Kopf 74 trägt eine schräge Stirnfläche 75, die mit einer entsprechend geneigten Dichtfläche 76, die den Boden des Ringkanals 71 im Auslaufstück 70 bildet, zusammenwirkt. Die Verschiebbarkeit der Hülse 69 ist durch einen Hydraulikmotor 77 gewährleistet. Er arbeitet gegen eine Druckfeder 78. Sie stützt sich an einer im Gehäuse 68 geführten Stellmutter 79 ab, die mit einer weiteren, von außen mittels eines Justierantriebes 80 betätigbaren Stellmutter 81 zusammenwirkt. Damit läßt sich die Stellmutter 79 in axialer Richtung zum Zwecke des Einstellens der gewünschten Hubweite der Hülse 69 verstellen. Die Stellmutter 79 dient als Anschlag für die Hülse 69.

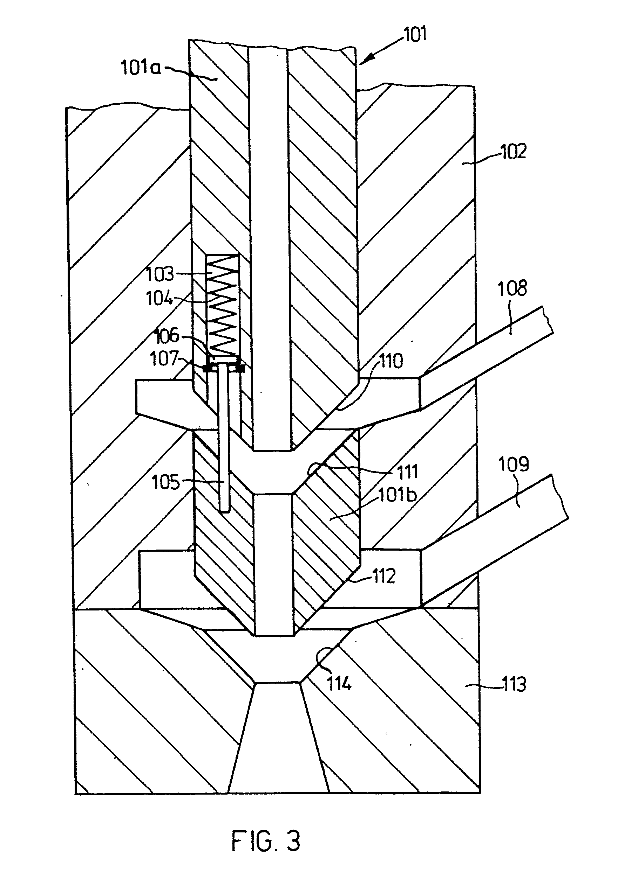

In Fig. 3 ist die Hülse 101 in Abschnitte 101a, 101b unterteilt. Beide Abschnitte 101a, 101b sind im Gehäuse 102 geführt. Aufbau und Arbeitsweise des Abschnittes 101a entspricht der Hülse 20 in Fig. 1. Jedoch weist der Abschnitt 101a stirnseitig eine achsparallele Ausnehmung 103 auf, in der eine Druckfeder 104 angeordnet ist. Sie drückt gegen einen im Abschnitt 101b verstellbar fixierten Stift 105, der einen in die Ausnehmung 103 hineinragenden Kopf 106 aufweist. Dieser Kopf 106 schlägt gegen einen Seegerring 107 an und hindert den Stift 105 am Herausgleiten. Deshalb wird bei der Öffnungsbewegung des Abschnittes 101a der Abschnitt 101b mitgenommen. Fig. 3 zeigt beide Füllstoffzuführungen 108, 109 in geöffnetem Zustand. In geschlossenem Zustand liegt die Stirnfläche 110 des Abschnittes 101a gegen die hintere Stirnfläche 111 des Abschnittes 101b an, und seine vordere Stirnfläche 112 liegt auf der im Auslaufstück 113 vorgesehenen Dichtfläche 114 auf. Beim Öffnungshub des Abschnittes 101a bleibt der Abschnitt 101b so lange ruhen, bis der Kopf 106 des Stiftes 105 gegen den Seegering 107 anschlägt und mitgenommen wird. Durch Einstellbarkeit der Länge des Stiftes 105 ist die Spaltweite zwischen den Abschnitten 101a, 101b variierbar. Die Spaltweite zwischen der Stirnfläche 112 des Abschnittes 101b und der Dichtfläche 114 wird durch die für den Abschnitt 101a eingestellte Hubweite der Hülse 101 minus der Spaltweite zwischen den Abschnitten 101a, 101b bestimmt.

## Patentansprüche

1. Vorrichtung zum Herstellen eines aus mindestens zwei fließfähigen Reaktionskomponenten und Füllstoffen bestehenden, Massiv oder Schaumstoff bildenden Gemisches, bestehend

a) aus Vorratsbehältern (1, 2; 51, 52) für Reaktionskomponenten;
b) aus Zuleitungen (3, 4; 53, 54), die von den Vorratsbehältern (1, 2; 51, 52)
c) über Dosierpumpen (5, 6; 55, 56) zu
d) einem Mischkopf (7; 57) führen und
e) über Einspritzöffnungen (8, 9; 58, 59) in eine Mischkammer (10; 60) münden;
f) aus einer an die Mischkammer (10; 60) anschließenden Auslaßbohrung (22; 61);
g) aus mindestens einem Vorratsbehälter (26; 73) für Füllstoff, von dem
h) mindestens eine Füllstoffzuführung (25; 72; 108, 109) abführt, deren Mündung (24; 71) die in einem Gehäuse (18; 68) angeordnete Auslaßbohrung (22; 61) konzentrisch umgibt,

dadurch gekennzeichnet, daß die Auslaßbohrung (22; 61) teilweise in einer koaxialen, im Gehäuse (18; 68) verschiebbaren Hülse (20; 69) angeordnet ist, die als Verschlußorgan für die Füllstoffzuführung (25; 72) gestaltet ist.

2. Vorrichtung nach Anspruch 1, dadurch gekennzeichnet, daß die Hubweite der Hülse (20; 69) einstellbar ist.

3. Vorrichtung nach Anspruch 1 oder 2, dadurch gekennzeichnet, daß mehrere Füllstoffzuführungen (108, 109) hintereinander angeordnet sind.

4. Vorrichtung nach einem der Ansprüche 1 bis 3, dadurch gekennzeichnet, daß die Füllstoffzuführung (25; 72) unter einem mindestens dem Schüttwinkel des einzubringenden Füllstoffes entsprechenden Winkel in die Auslaßbohrung (22; 61) einmündet.

5. Vorrichtung nach einem der Ansprüche 1 bis 4, dadurch gekennzeichnet, daß in der Auslaßbohrung (22; 61) ein Reinigungsstößel (35; 62) verschiebbar gelagert ist.

6. Vorrichtung nach einem der Ansprüche 1 bis 5, dadurch gekennzeichnet, daß die Auslaßbohrung (22) in einem unter einem Winkel zum Auslaß (17) der Mischkammer (10) vorgesehenen Vorsatzstück (16) angeordnet ist.

7. Vorrichtung nach einem der Ansprüche 1 bis 6, dadurch gekennzeichnet, daß der Auslaßbohrung (61) die Mischkammer (60), in der gleichen Achse liegend, vorgeordnet ist.

## Claims

1. An apparatus for producing a solid-forming or foam-forming mixture consisting of at least two flowable reaction components and fillers, consisting

a)    of storage containers (1, 2; 51, 52) for reaction components;

b)    of feed pipes (3, 4; 53, 54) which lead from the storage containers (1, 2; 51, 52)

c)    via metering pumps (5, 6; 55, 56) to

d)    a mixer head (7; 57) and

e)    merge via injection openings (8, 9; 58, 59) into a mixing chamber (10; 60);

f)    of an outlet passage (22; 61) connected to the mixing chamber (10; 60);

g)    of at least one storage container (26; 73) for filler, from which

h)    at least one filler feed pipe (25; 72; 108, 109) leads, the mouth (24; 71) of which concentrically surrounds the outlet passage (22; 61), which is arranged in a housing (18; 68),

characterised in that the outlet passage (22; 61) is arranged partially in a coaxial tube (20; 69) which is movable in the housing (18; 68) and which is designed as a closure means for the filler feed pipe (25; 72).

2. An apparatus according to Claim 1, characterised in that the stroke width of the tube (20; 69) is adjustable.

3. An apparatus according to Claim 1 or 2, characterised in that several filler feed pipes (108, 109) are arranged in series.

4. An apparatus according to one of Claims 1 to 3, characterised in that the filler feed pipe (25; 72) enters into the outlet passage (22; 61) at an angle corresponding at least to the angle of repose of the filler to be introduced.

5. An apparatus according to one of Claims 1 to 4, characterised in that a cleaning plunger (35; 62) is movably mounted in the outlet passage (22; 61).

6. An apparatus according to one of Claims 1 to 5, characterised in that the outlet passage (22) is arranged in an attachment (16) provided at an angle to the outlet (17) of the mixing chamber (10).

7. An apparatus according to one of Claims 1 to 6, characterised in that the mixing chamber (60) is arranged upstream of the outlet passage (61), lying in the same axis.

## Revendications

1. Dispositif pour préparer un mélange composé d'au moins deux composants de réaction fluides et de charges, et qui forme une matière massive ou en mousse, constitué par

a)    des réservoirs (1, 2; 51, 52) pour composants de réaction;

b)    des conduites d'arrivée (3, 4; 53, 54) qui mènent des réservoirs (1, 2; 51, 52),

c)    par l'intermédiaire de pompes doseuses (5, 6; 55, 56) à

d)    une tête de mélange (7; 57) et e) débouchent par des orifices d'injection (8, 9; 58, 59) dans une chambre de mélange (10; 60);

f)    un perçage de sortie (22; 61) qui se raccorde à la chambre de mélange (10; 60);

g)    au moins un réservoir (26; 73) pour la charge d'où

h)    part au moins une arrivée de charge (25; 72; 108, 109), dont le débouché (24; 71) entoure concentriquement le perçage de sortie (22; 61) disposé dans un boîtier (18; 68),

caractérisé en ce que le perçage de sortie (22; 61) est disposé partiellement dans un manchon coaxial (20; 69) pouvant coulisser dans le boîtier (18; 68) et qui est réalisé sous la forme d'un organe obturateur pour l'arrivée de la charge (25; 72).

2. Dispositif suivant la revendication 1, caractérisé en ce que l'amplitude de course du manchon (20; 69) est réglable.

3. Dispositif suivant la revendication 1 ou 2, caractérisé en ce que plusieurs arrivées de charge (108, 109) sont disposées l'une derrière l'autre.

4. Dispositif suivant l'une des revendications 1 à 3, caractérisé en ce que l'arrivée de charge (25; 72) débouche dans l'ouverture de sortie (22; 61) sous un angle correspondant au moins à la pente d'éboulement de la charge à introduire.

5. Dispositif suivant l'une des revendications 1 à 4, caractérisé en ce qu'un poussoir de nettoyage (35; 62) est monté coulissant dans le perçage de sortie (22; 61).

6. Dispositif suivant l'une des revendications 1 à 5, caractérisé en ce que le perçage de sortie (22) est disposé dans une pièce adaptatrice (16) prévue en formant un certain angle avec la sortie (17) de la chambre de mélange (10).

7. Dispositif suivant l'une des revendications 1 à 6, caractérisé en ce que la chambre de mélange (60) est placée en amont du perçage de sortie (61) en se trouvant sur le même axe.

FIG. 1

FIG. 2

FIG. 3